# EUROPEAN PATENT APPLICATION

(11) **EP 2 096 596 A2**
(43) Date of publication of application: **02.09.2009**
(21) Application number: 09153303.4
(22) Date of filing: 20.02.2009
(51) Int. Cl.: G06Q 30/00

(54) **Incentive mechanism for developing activity-based triggers of advertisement presentation**

(30) Priority: 04.04.2008 US 62785; 28.02.2008 US 32421 P
(71) Applicant: Palo Alto Research Center Incorporated, Palo Alto, California 94304 (US)
(72) Inventor: Greene, Daniel H., Sunnyvale, CA 94087 (US); Partridge, Kurt, Palo Alto, CA 94306 (US); Begole, James, San Jose, CA 95129 (US)
(74) Representative: Grünecker, Kinkeldey, Stockmair & Schwanhäusser Anwaltssozietät

(57) **Abstract**

One embodiment of the present invention provides an activity-based advertisement system. During operation, the system identifies at an advertising service provider a set of features that characterize a customer's activity. The system then receives at least one trigger from the trigger author, wherein the trigger is based on the features and specifies conditions for an advertising opportunity. The system then identifies an advertising opportunity for a customer when the conditions specified by the trigger are met. The system further presents one or more advertisements to the customer during the opportunity period.

## Description

### BACKGROUND

This disclosure generally relates to advertising systems. In particular, this disclosure relates to incentive mechanism for developing activity-based triggers of advertisement presentation.

The ubiquitous Internet connectivity coupled with wide deployment of wireless devices is drastically changing the advertising industry. Of the $385 billion spent globally on advertising in 2005, online and wireless spending accounted for $19 billion. Internet advertising was the fastest-growing form of advertisement, with a cumulative annual growth rate of 18.1 percent. However, Internet advertising has its limitations, and new opportunities remain to be discovered to sustain the dramatic rate of growth in new media advertising.

Existing Internet advertisements only work when a user is online and watching a computer screen. Traditional advertising, in contrast, comes in many forms. For example, signs can advertisee products inside retail stores. Radio programs can advertise products when the listener engages in a wide variety of activities. Printed advertisements can appear anywhere paper is used, from newspapers, to flyers, receipts, and ticket stubs. Although Internet advertising surpasses traditional advertising in its ability to better target consumer interest, it still cannot be closely tailored to human activities.

Delivering activity-based advertisements to a customer's mobile device is a new technique that compliments the conventional advertising methods. Activity-based advertising can better target a customer's needs and dynamically adjust to a customer's activity. In such systems, it is important to implement an activity-based trigger mechanism, so that the system can identify valuable advertising opportunities and present advertisements effectively.

### BRIEF DESCRIPTION OF THE FIGURES

FIG. 1 illustrates an exemplary architecture for a receptive-opportunity-based advertising system with an incentive mechanism for trigger development, in accordance with an embodiment of the present invention.

FIG. 2 presents a block diagram illustrating an exemplary mode of operation of a receptive-opportunity-based advertising system, in accordance with an embodiment of the present invention.

FIG. 3 presents a flowchart illustrating an exemplary process of receiving triggers and advertiser's bids, identifying a receptive opportunity, and presenting advertisements, in accordance with an embodiment of the present invention.

FIG. 4 illustrates an exemplary computer system that facilitates an advertising system based on receptive opportunities and equipped with an incentive mechanism for trigger development, in accordance with an embodiment of the present invention.

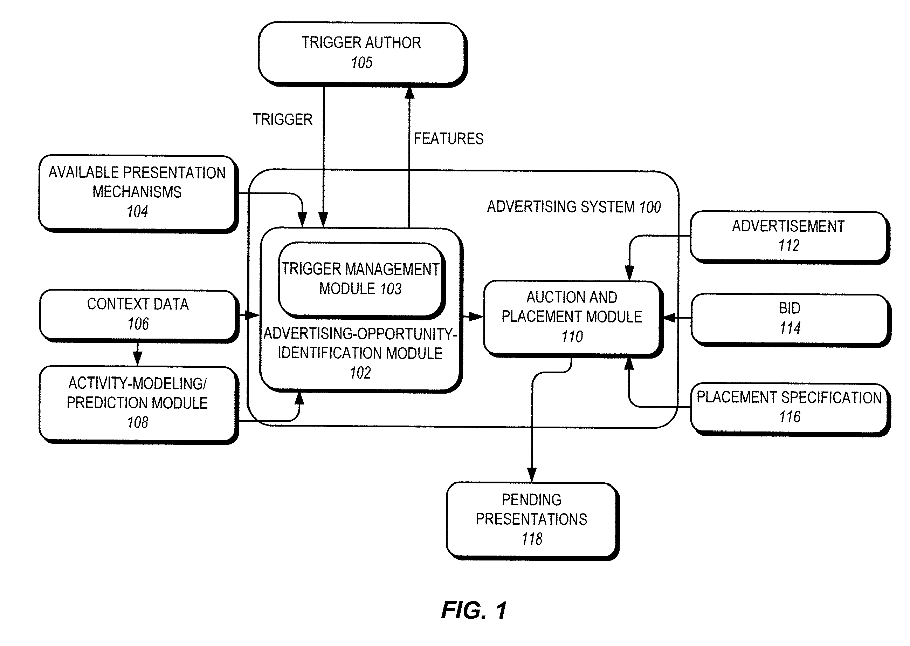

In the drawings, the same reference numbers identify identical or substantially similar elements or acts. The most significant digit or digits in a reference number refer to the figure number in which that element is first introduced. For example, element 102 is first introduced in and discussed in conjunction with FIG. 1.

### SUMMARY

One embodiment of the present invention provides an activity-based advertisement system. During operation, the system identifies at an advertising service provider a set of features that characterize a customer's activity. The system then receives at least one trigger from the trigger author, wherein the trigger is based on the features and specifies conditions for an advertising opportunity. The system then identifies an advertising opportunity for a customer when the conditions specified by the trigger are met. The system further presents one or more advertisements to the customer during the opportunity period.

In a variation of this embodiment, the system allows a number of advertisers to bid for the advertising opportunity.

In a variation of this embodiment, the trigger author is an advertiser.

In a variation of this embodiment, the system provides a reward to the trigger author subsequent to a successful advertisement presentation.

In a variation of this embodiment, the system identifies one or more triggers which produce the most advertising opportunities.

In a variation of this embodiment, the system identifies one or more triggers which result in advertisement presentations that are not bothersome to the customer.

In a variation of this embodiment, the system publishes the trigger and allows one or more advertisers to modify the published trigger and submit the modified trigger.

In a variation of this embodiment, the features can include one or more of: time of day, day of week, weather condition, the customer's location, speed of the customer's motion, content of the customer's calendar, messages, and emails, history of the customer's activities, and the customer's previous response to advertisements. In one embodiment the computer system of claim 15, further comprises an auction mechanism configured to allow a number of advertisers to bid for the advertising opportunity.
In a further embodiment the trigger author is an advertiser.
In a further embodiment the computer system further comprises a reward mechanism configured to provide a reward to the trigger author subsequent to a successful advertisement presentation.
In a further embodiment the computer system further comprises a trigger evaluation mechanism configured to identify one or more triggers which produce the most advertising opportunities.
In a further embodiment the computer system further comprises a trigger evaluation mechanism configured to identify one or more triggers which result in advertisement presentations that are bothersome to the customer.
In a further embodiment the computer system further comprises a trigger-publishing mechanism configured to:
publish the trigger; and
allow one or more advertisers to modify the published trigger and submit the modified trigger.
In a further embodiment the features can include one or more of:
time of day;
day of week;
weather condition;
the customer's location;
speed of the customer's motion;
content of the customer's calendar, messages, and emails;
history of the customer's activities; and
the customer's previous response to advertisements.
In one embodiment of the computer-readable medium of claim 9, the features can include one or more of:
time of day;
day of week;
weather condition;
the customer's location;
speed of the customer's motion;
content of the customer's calendar, messages, and emails;
history of the customer's activities; and
the customer's previous response to advertisements.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the principles and features disclosed herein.

Embodiments of the present invention provide an advertising system that presents advertisements based on receptive opportunities with respect to a customer's activities. In particular, this system facilitates an incentive mechanism that allows a third party to author activity-based triggers that the system can use to identify advertising opportunities. In one embodiment, the system targets advertising to mobile customers (e.g., via cell phones, personal digital assistants (PDAs), and in some cases nearby electronic billboards). The system determines the current activity of the customer and identifies advertising opportunities based on one or more triggers. The system then delivers activity-targeted advertising that can influence the customer's future purchase behavior.

For example, the system assesses the customer's current contexts, predicts that the customer usually visits a restaurant after leaving the train on the way back from work, identifies that a good opportunity arises while the customer is waiting for the train, and presents the customer with relevant and useful advertising.

In conventional search-based Internet advertising, the provider typically creates markets for keyword combinations, and the advertisers bid in online auctions for those keyword combinations. In short, the provider defines the opportunities and the advertisers compete for those opportunities. In activity-based advertising, however, it is more difficult to define the opportunities, because an activity-based advertising opportunity can involve many variables in multiple semantic dimensions, such as time, space, weather, contexts, etc. In general, certain behavior characteristics of the customers can define an opportunity. For example, a customer, whose activity has the characteristics of (1) traveling on foot, (2) toward a shopping center, and (3) the time is late morning, may represent a good opportunity for restaurant advertising. While a provider might define opportunities, it is more likely that advertisers or a third party, with their specific market knowledge, would be better able to define their best advertising opportunities. Embodiments of the present invention provide an incentive mechanism that allows third parties to develop trigger procedures which can help the provider better identify advertiser opportunities.

This disclosure uses the following terminologies:

*Advertiser.* This term typically refers to a company wishing to advertise its service or products. The typical advertiser would like to maximize profit, where advertising is one of the costs. For this reason, well-targeted advertising is more effective for advertisers. This disclosure uses the terms "advertiser" and "advertisement broadly to refer to content provider and content, where, for example, the content provider is willing to pay to have targeted content delivered to customers, even if that content does not advertise a specific service or product.

*Customer.* This term refers to a recipient of the advertising - a potential customer of the advertisers. Customers typically welcome some advertisements but prefer not to receive other kinds of advertisements. For this reason, well-targeted advertising is more acceptable for customers. This disclosure uses the term "customer" broadly to include people who receive content, even if that content is not meant to include to the person as a customer of the advertiser.

*Provider.* This term refers to the provider of the service that delivers advertisements to customers. The provider is responsible for delivering well-targeted advertising. Embodiments of the present invention provide the technology that a provider can use to deliver advertisements based on a customer's activity and context. In some embodiments, there can be a separate *publisher* who provides the channels for presentation to the customer. The *provider* can choose the advertisements and the publisher's channel, and, depending on the payment mechanism, charges the advertiser and rewards the publisher.

*Presentation.* This term refers to the showing of an advertisement to a customer. Note that embodiments of the present invention are independent from the form of the presentation. Presentation might include adding a banner or pop-up to a PDA or cell phone, playing an audio message by phone, music player, or car stereo, modifying a map on a GPS navigation device, or changing a billboard near the customer.

*Payment.* This term refers to the amount an advertiser pays the provider after a "successful" presentation. Successful presentations can be defined in many different ways. Correspondingly, the payment can also be structured differently. It could be pay-per-presentation, pay-per-click, or pay-per-action (a form of commission defined by the advertiser). In one embodiment, a new pay-per-confirmed-prediction payment structure is used for activity-based advertising.

*Activity*. This term refers to the activity of the customer. For example, a customer's activity might be "walking toward a train station." The activity can be described at different semantic levels. For example, "walking toward a train station" might also be described as "commuting home after work." In the advertising system in accordance with some embodiments, the activity may be partially described with objectives, such as "to obtain exercise," tools, such as "with a bicycle," skill levels, such as "expert," and other modifiers/qualifiers of the activity. Activity-targeting or activity-based advertising may rely on complete or partial descriptions on different semantic levels to facilitate reaching large numbers of relevant activities.

*Context.* This term refers to additional information surrounding the customer's activity. For example, the activity might be occurring on a rainy day. In some embodiments, both the activity description and the context description are used for activity-based presentation of advertisements. Note that the term "context" if often used in conjunction with terms related to activities.
The terms "activity," "activity targeting," and "activity-based advertising" are typically used in a way that involves features of the activity as well as possible additional context for targeting the advertising.

*Opportunity*. Also referred to as "advertising opportunity" or "receptive opportunity," this term refers to a time window identified by the adverting system during which selected advertisements can be presented to a customer.

*Trigger*. A trigger, or trigger procedure, is a set of conditions associated with a customer's activity and contextual information. When these conditions are met, the advertising system identifies an advertising opportunity.

FIG. 1 illustrates an exemplary architecture for a receptive-opportunity-based advertising system with an incentive mechanism for trigger development, in accordance with an embodiment of the present invention. In this embodiment, an advertising system 100 includes an advertising-opportunity-identification module 102 and an auction and placement module 110. Advertising-opportunity-identification module 102 includes a trigger management module 103, which is in communication with a trigger author 105. Advertising-opportunity-identification module 102 is also in communication with available presentation mechanisms 104 and receives context data 106, which indicates the current context of the customer. In addition, advertising-opportunity-identification module 102 is in communication with an activity-modeling/prediction module 108, which predicts or derives the customer's activities based on customer context data 106.

During operation, auction and placement module 110 receives a bid 114 from an advertiser for a particular advertising opportunity. Together with bid 114, an advertiser can also send an advertisement 112 and a placement specification 116 to auction and placement module 110. Placement specification 116 specifies the advertiser's preferences for presentation, and can include specifications for one or more of: the targeted activity, customer indeterminacy, and/or the presentation opportunity. After an advertiser's bid is selected, advertising system 110 then provides the corresponding advertisement presentation 118 during a receptive opportunity to a customer's mobile device.

In one embodiment, trigger management module 103 identifies a set of primitive features associated with a customer's behavior, such as time of day, location, direction of travel, weather, novelty of behavior, etc. Trigger management module 103 then communicates these features to trigger author 105, which can be an advertiser or a third party (such as a market research firm).
Based on the received features, trigger author 105 authors trigger procedures which define higher semantic level behaviors. The trigger procedures use the provider's primitive features as input, and can be used to compute higher level features as output. For example, a "needs lunch" feature can be the result of combining the primitive features of time-of-day and location to identify an advertising opportunity.

The trigger procedures created by trigger author 105 are submitted to trigger management module 103. Advertising-opportunity identification module 102 then uses these triggers to define opportunities, for which the advertisers can bid to present their advertisements. In one embodiment, trigger author 105 is also an advertiser. This advertiser can subsequently compete against other advertisers for the opportunity identified based on the submitted trigger. When a trigger is successfully used for presentation, the winning bidder is charged, and the author of the trigger can receive a reward. In one embodiment, the reward is in the form of royalty, such as a percentage of the payment received by the provider.

In some embodiments, advertising system 100 can experiment with the received trigger procedures to find those triggers that work best for advertisers. It can also experiment to ensure that a trigger is not bothersome to customers. In this way, the provider in its role as a broker can optimize the trigger use for both advertisers and customers. In one embodiment, the system can derive the level of success of a trigger by monitoring the customer's behavior after the presentation of advertisements. In other embodiments, advertising system 100 can also collect customer feedback by conducting surveys through the customer's mobile device. In these embodiments, trigger author 105 has incentive to construct the most useful triggers for providers, because those triggers will survive the provider's experiments and deliver the largest royalties.

In some embodiments, trigger management module 103 allows other advertisers to bid and use triggers submitted by trigger author 105. When a trigger authored by trigger author 105 is used by other advertisers, trigger author 105 can be compensated accordingly, via royalties, for the shared use of trigger. The competition for the shared use of triggers can improve the quality of advertisements for the customers and in turn increase the revenues for the provider.

In some embodiments, trigger management module 103 may seed the trigger-authoring process with one or more initial triggers. It is then expected that eventually the advertisers, who are experts in their markets, will author the best triggers. This process may evolve some triggers that are derivative improvements of existing triggers. In some embodiments, the system may split the royalties among authors. In a further embodiment, trigger management module 103 can keep the internal definition of triggers private. One trigger can use the results of another trigger by explicit invocation. In this way, the trigger management module 103 can document the trigger dependency and determine the royalty splitting accordingly. In another embodiment, trigger management module can publish all the triggers, which can inspire the trigger authors to create more, better triggers. Trigger management module 103 can further provide some form of arbitration when trigger authors do not explicitly acknowledge the derivative relation between triggers.

In the example illustrated in FIG. 1, auction and placement module 110 receives an advertisement 112, a corresponding bid 114, and corresponding placement specification 116 from a bidding advertiser. The bidding advertiser can use the placement specification 116 to request certain conditions for placing advertisement 112, such as time window, customer location, activity type, target audience, etc. Auction and placement module 110 then ranks the bids for each topic, and selects a number of highest bids. In one embodiment, trigger management module 103 can automatically and implicitly define a trigger based on placement specification 116. These trigger procedures could be used to make suggestions to new advertisers for new bids. Optionally, trigger procedures derived from placement specification 116 can be implicit, which precludes other advertisers from creating new triggers with only small differences from these implicit triggers to split the auction market. These implicit triggers can also reduce the amount of work required of the provider to police the trigger procedures and to determine which triggers survive and which do not, and reduces the advertiser dissatisfaction when one of such triggers is removed from the available set.

The architecture illustrated in FIG. 1 is only one possible embodiment of the advertising system. In one embodiment, presentation mechanisms 104 can include a variety of devices that can present an advertisement. Such devices can include a mobile phone, PDA, computer, public display, radio, TV, in-vehicle navigation system, etc.

Context data 106 can include different types of information that can be used to determine the customer's past, current, or future activities. Such information can include physical information such as time of day, day of week, weather condition, the customer's location, speed of motion, etc. Context data 106 can also include logical contents pertaining to the customer, such as the content of the customer's calendar, instant messages, and emails, history of the customer's past activities, and the customer's previous response to advertisements. In one embodiment, context data 106 can be collected by a mobile device, such as a cell phone, carried by the customer.

In one embodiment, activity-modeling/prediction module 108 uses context data 106 to derive past, current, and/or future activities associated with a customer. For example, the customer's cell phone can be equipped with a GPS. Based on pre-stored venue information and the traces of the customer's locations at different times, activity-modeling/prediction module 108 can determine that at a certain time of day the customer typically engages in a particular activity.

In a further embodiment, activity-modeling/prediction module 108 analyzes context data 106 to determine the customer's current activity and predict the customer's future activity. Based on this activity information, context data 106, and information about available presentation mechanisms 104 which are in the vicinity of the customer (e.g., the customer's cell phone or a dynamic billboard close to the customer), advertising-opportunity-identification module 102 identifies suitable receptive opportunities using triggers stored in trigger management module 103. For example, the system might identify an activity of "eat" when a customer is waiting on a platform for a commuter train, and has not yet had dinner. When this situation matches a trigger, advertising-opportunity-identification module 102 produces an opportunity description, which can include the time, presentation mechanism, and topic for advertisements. Note that in some embodiments, the activity analysis can be performed by advertising-opportunity-identification module 102. In further embodiments, the activity analysis can be performed based on the authored triggers. In addition, the amount of activity analysis performed based on triggers can vary. For example, an activity can be identified according to a trigger that identifies the "eat" activity, based on context such as time of day and location.

Note that activity-modeling/prediction module 108 can reside on the customer's mobile device or on a remote server. Similarly, advertising-opportunity-identification module 102 can reside on a customer's mobile device or on a remote server.

Once good advertising opportunities are identified, the system then determines a relevant advertisement to present. In one embodiment, after receiving an opportunity description from advertising-opportunity-identification module 102, auction and placement module 110 selects one or more pending presentations 118 to be placed during the receptive opportunity. In one embodiment, the selection of presentations to be placed during the opportunity is based on an optimization algorithm which takes into account a number of factors. For example, auction and placement module 110 chooses from the pending presentations according to one or more of:
1. Size of the advertiser's bid. This will increase the revenue to the provider, and will tend to select the more relevant advertisements for the customer.
2. Time of the opportunity relative to the topic activity. This allows the provider to lower the weighting of activities further ahead or further behind the present activity.
3. The mix of topics being presented to the customer.
4. Past experience with the customer. (This may already be included in the topic. For example, the advertisers may bid for customers whose activity indicates that they have previously accepted recommendations.)
5. Experimentation.

In general, any criteria that will help predict the success of the presentation can be used by the provider to select pending presentations. In one embodiment, the provider can also adjust the charge to an advertiser according to the quality of the receptive opportunity. For example, the advertiser bids on topic, assuming an "ideal" quality presentation, but the provider may give the advertiser a discount according to some of the criteria listed above.

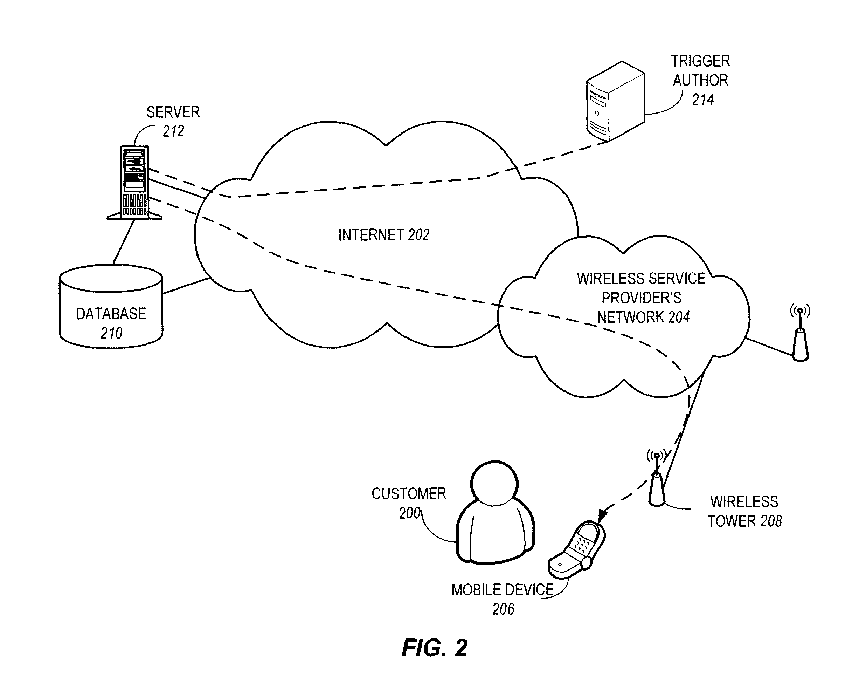

FIG. 2 presents a block diagram illustrating an exemplary mode of operation of a receptive-opportunity-based advertising system, in accordance with an embodiment of the present invention. In this example, a customer 200 uses a mobile device 206, which can be a smart phone. Mobile device 206 is in communication with a provider's server 212 via a wireless tower 208, a wireless service provider's network 204, and the Internet 202. During operation, provider's server 212 receives triggers created by a trigger author 214, and stores the received trigger in a database 210. Mobile device 206 collects a set of context data, such as customer 200's calendar content, the GPS trace of the places he has been to, the current time, etc., and determines the current or future activity for customer 200. For example, mobile device 206 can detect that it is now 6 pm, customer 200 has just left the office, and that he is currently at a train station. From previously collected data, mobile device 206 also learns that customer 200 typically visits a restaurant after a train ride. Mobile device 206 then communicates this information to provider's server 212.

Based on the context information received from mobile device 206 and one of the triggers stored in database 210, provider's server 212 determines that the next 15 minutes would be a good receptive opportunity to present advertisements for restaurants and bars. Correspondingly, provider's server 212 retrieves the advertisements stored in database 210, and selects the advertisement presentations that match the opportunity description. Note that this selection process can be configured to meet the provider's needs. For example, the provider can select presentations with the highest bid for the topics associated with the opportunity description, or the presentations that are the closest match to the customer needs. In one embodiment, server 212 can also compute a discount to the advertiser based on the predicted quality of the opportunity with respect to the presentation.

Server 212 then communicates the advertisements and instructions on how to present these advertisements to mobile device 206. In one embodiment, the advertisements can be streamed video, audio, graphics, text, or a combination of above. After receiving the advertisements, mobile device 206 presents these advertisements based on the instructions. Note that other presentation mechanism can also be used. For example, the presentation mechanism can be a nearby LCD display installed in the train. The LCD display can be equipped with some communication mechanism, such as Bluetooth, to communicate with mobile device 206. During the presentation, mobile device 206 can stream the advertisements to the LCD display, so that customer 200 can view the advertisements more easily on a bigger screen.

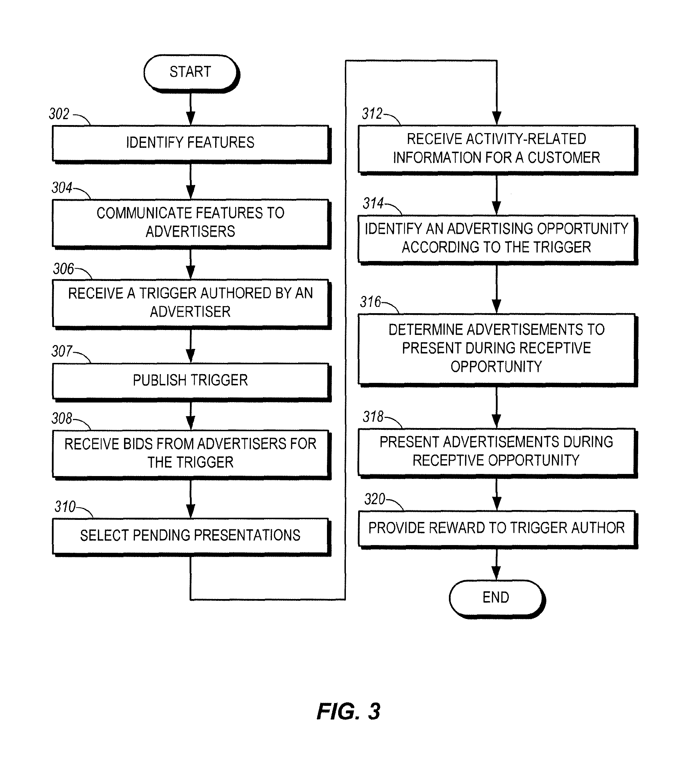

FIG. 3 presents a flowchart illustrating an exemplary process of receiving triggers and advertiser's bids, identifying a receptive opportunity, and presenting advertisements, in accordance with an embodiment of the present invention. During operation, the system first identifies a set of features which represent contextual information about a customer's activities (operation 302). The system then communicates these features to one or more advertisers, thereby allowing them to author corresponding triggers (operation 304). Subsequently, the system receives at least one trigger authored by an advertiser (operation 306). The system then publishes the trigger (operation 307). Note that, optionally, the system can receive additional triggers derived from the published trigger.

Next, the system receives a number of bids submitted by advertisers in response to the published trigger (operation 308). From these bids, the system selects one or more advertisements to be pending presentations (operation 310). The system further receives activity-related information for a customer (operation 312). Based on this information, the system identifies an advertising opportunity according to the trigger (operation 314). The system then determines the advertisements to present during the identified receptive opportunity (operation 316). After the system presents advertisements during the receptive opportunity (operation 318), the system provides a reward to the trigger author (operation 320).

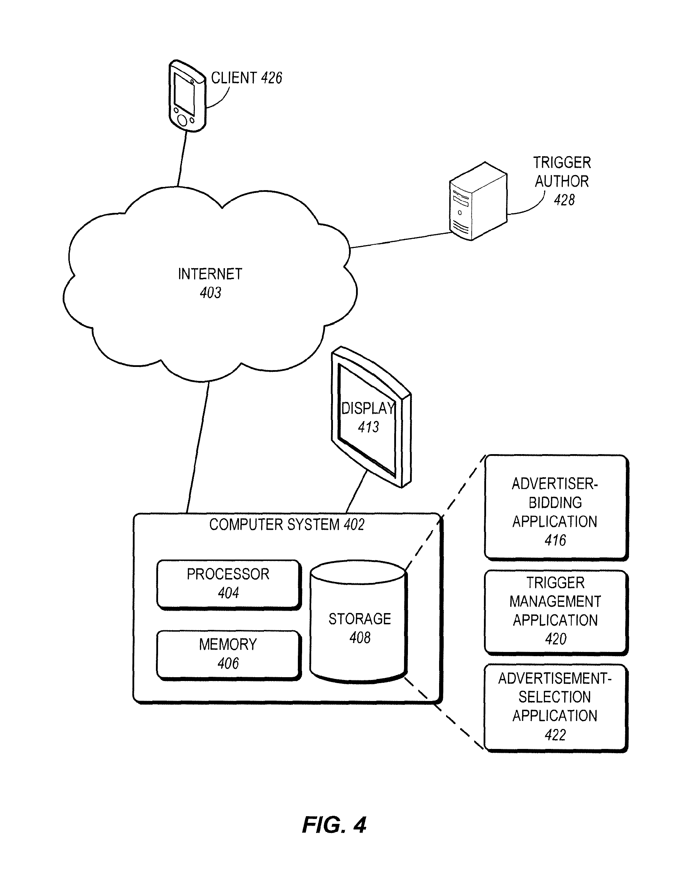

FIG. 4 illustrates an exemplary computer system that facilitates an advertising system based on receptive opportunities and equipped with an incentive mechanism for trigger development, in accordance with an embodiment of the present invention. In this example, computer system 402 performs the functions for a provider. Via Internet 403, computer system 402 is in communication with a trigger author 428 and a client 426, which in one embodiment can be a PDA or cell phone.

Computer system 402 can include a processor 404, a memory 406, and a storage device 408. In one embodiment, computer system 402 is coupled to a display 413. Storage device 408 stores an advertiser-bidding application 416, a trigger management application 420, and an advertisement-selection application 422. During operation, advertiser-bidding application 416, trigger management application 420, and an advertisement-selection application 422 are loaded from storage device 408 into memory 406, and executed by processor 404. Accordingly, processor 404 performs the aforementioned functions to facilitate a receptive-opportunity-based advertising system with an incentive mechanism to induce trigger author 428 to create triggers.

The methods and processes described in the detailed description section can be embodied as code and/or data, which can be stored in a computer-readable storage medium as described above. When a computer system reads and executes the code and/or data stored on the computer-readable storage medium, the computer system perform the methods and processes embodied as data structures and code and stored within the computer-readable storage medium.

Furthermore, the methods and processes described below can be included in hardware modules. For example, the hardware modules can include, but are not limited to, application-specific integrated circuit (ASIC) chips, field programmable gate arrays (FPGAs), and other programmable-logic devices now known or later developed. When the hardware modules are activated, the hardware modules perform the methods and processes included within the hardware modules.

## Claims

1. A computer-implemented method for facilitating an activity-based advertisement system, the method comprising:
identifying at an advertising service provider a set of features that characterize a customer's activity;
receiving at least one trigger from the trigger author, wherein the trigger is based on the features and specifies conditions for an advertising opportunity;
identifying an advertising opportunity for a customer when the conditions specified by the trigger are met; and
presenting one or more advertisements to the customer during the opportunity period.

2. The method of claim 1, further comprising allowing a number of advertisers to bid for the advertising opportunity.

3. The method of claim 1, wherein the trigger author is an advertiser.

4. The method of claim 1, further comprising providing a reward to the trigger author subsequent to a successful advertisement presentation.

5. The method of claim 1, further comprising identifying one or more triggers which produce the most advertising opportunities.

6. The method of claim 1, further comprising identifying one or more triggers which result in advertisement presentations that are bothersome to the customer.

7. The method of claim 1, further comprising:
publishing the trigger; and
allowing one or more advertisers to modify the published trigger and submit the modified trigger.

8. The method of claim 1, wherein the features can include one or more of:
time of day;
day of week;
weather condition;
the customer's location;
speed of the customer's motion;
content of the customer's calendar, messages, and emails;
history of the customer's activities; and
the customer's previous response to advertisements.

9. A computer-readable medium storing instructions which when executed by a computer cause the computer to perform a method for facilitating an activity-based advertisement system, the method comprising:
identifying at an advertising service provider a set of features that characterize a customer's activity;
receiving at least one trigger from the trigger author, wherein the trigger is based on the features and specifies conditions for an advertising opportunity;
identifying an advertising opportunity for a customer when the conditions specified by the trigger are met; and
presenting one or more advertisements to the customer during the opportunity period.

10. The computer-readable medium of claim 9, wherein the method further comprises allowing a number of advertisers to bid for the advertising opportunity.

11. The computer-readable medium of claim 9, wherein the trigger author is an advertiser.

12. The computer-readable medium of claim 9, wherein the method further comprises providing a reward to the trigger author subsequent to a successful advertisement presentation.

13. The computer-readable medium of claim 9, wherein the method further comprises identifying one or more triggers which produce the most advertising opportunities.

14. The computer-readable medium of claim 9, wherein the method further comprises identifying one or more triggers which result in advertisement presentations that are bothersome to the customer.

15. A computer system for facilitating an activity-based advertisement system, the computer system comprising:
a processor;
a memory coupled to the processor;
a feature-identification mechanism configured to identify at an advertising service provider a set of features that characterize a customer's activity;
a trigger-receiving mechanism configured to receive at least one trigger from the trigger author, wherein the trigger is based on the features and specifies conditions for an advertising opportunity;
an opportunity-identification mechanism configured to identify an advertising opportunity for a customer when the conditions specified by the trigger are met; and
a second communication mechanism configured to communicate one or more advertisements to a mobile device, thereby facilitating presentation of the advertisements to the customer during the opportunity period.
